# EUROPEAN PATENT APPLICATION

(11) **EP 2 309 153 A1**
(43) Date of publication of application: **13.04.2011**
(21) Application number: 08773202.0
(22) Date of filing: 17.07.2008
(51) Int. Cl.: F16H 61/00, F16H 59/14

(54) **A GEAR SHIFT METHOD FOR AN AUTOMATIC STEP GEARBOX OF A VEHICLE**

(71) Applicant: Huang, Zhaohuan, Guangxi 530022 (CN)
(72) Inventor: Huang, Zhaohuan, Guangxi 530022 (CN)
(74) Representative: Garavelli, Paolo
(86) International application number: PCT/CN2008/071666
(87) International publication number: WO 2010/006478

(57) **Abstract**

A gear shift method for an automatic step gearbox of a vehicle involves inputting an engine torque to a high-speed shift or a middle-speed shift directly. According to the vehicle speed and a burthen of an engine, the speed is changed in positive direction to enter to the high-speed shift or is changed in reverse direction to return to the low-speed shift through the gearbox. The automatic gearbox utilizes the method to cancel hydro-transmitter and hydraulic electric controlling system.

## Description

The present invention relates to a gear shift method for an automatic step gearbox of a vehicle. More particularly, the invention refers to a gear shift method for an automatic step gearbox containing a planetary gear set and a clutch.

So far, all the gear shift methods used in the vehicles all over the world of all the gearboxes, whether they are automatic or artificial gearboxes, with few exceptions are methods of altering from maximum transmission ratio to minimum transmission ratio. The maximum transmission ratio of a vehicle is designed according to the maximum power torque of the engine, the maximum burthen of the vehicle, and the maximum torque needed when starting at the maximum climbing angle. But the maximum transmission ratio needed by the vehicle when starting and accelerating on the flat land is less than half of the maximum ratio designed. The vehicle often starts and accelerates on the flat land and rarely on the slope. The gearboxes of the vehicles nowadays cannot provide a smaller transmission ratio for starting and accelerating on the flat land, and an automatic gear shift method with a larger transmission ratio is used when starting on the slope, so the fuel consumption of the vehicle is greater. The automatic gearboxes of the vehicles nowadays are all hydraulic electronic controlling gear shift, so the vehicles containing automatic gear shift function have greater fuel consumption.

The present invention intends to provide a gear shift method of an automatic step gearbox with less cost and lower fuel consumption.

The gear shift method of the present invention involves inputting an engine torque to a high-speed shift or a middle-speed shift directly, and the gearbox changes the speed in positive direction to enter to the high-speed shift or in reverse direction to return to the low-speed shift according to the vehicle speed and a burthen of an engine. This gear shift method can use a smaller transmission ratio when a vehicle is starting and accelerating on the flat land to improve the starting and accelerating properties, and use a larger transmission ratio when starting on a slope to enlarge the torque. The invention enables vehicles to realize high efficiency and less fuel consumption, and reduces the cost of the automatic gearbox significantly.

The present invention cancels the hydro-transmitter and the hydraulic electric controlling system which are frequently used in the current automatic gearbox, and makes the structure of the gearbox become quite simple. The cost is only 1/8 of the present automatic gearbox. Improving the accelerating properties obviously reduces power loss, and saves 30-40% of the fuel consumption.

The invention is further explained by means of the following figure.

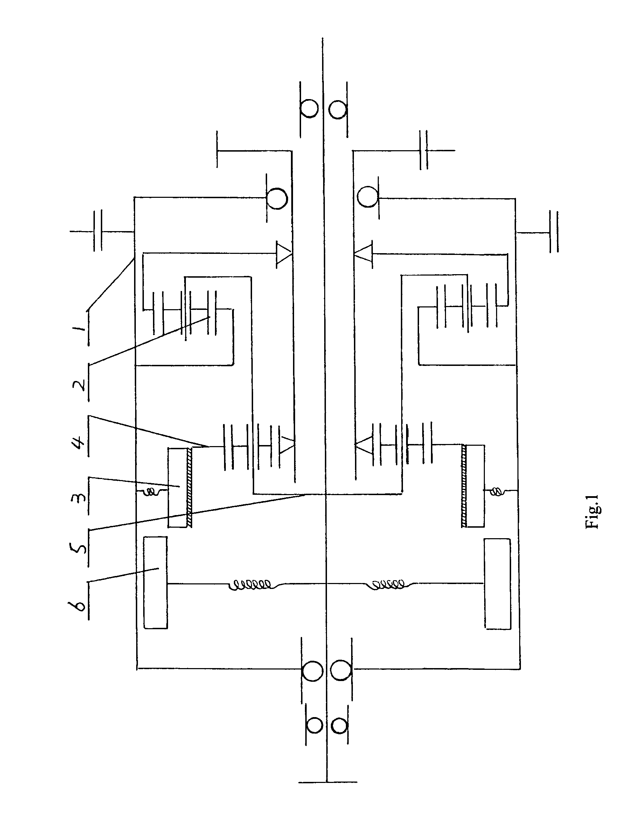

Figure 1 is the schematic drawing of a three speed automatic step gearbox of a vehicle.

The torque of an engine is input through the clutch to the rotating drum (1) of the automatic gearbox (stepped transmission), and to the central gear (2) of the low-speed shift (low-speed gear) through the rotating drum, while to the gear ring (4) of the middle-speed gear through the centrifugal clutch (3) in the rotating drum of the transmission. Since the planet carriers (5) of the two planetary gear transmission sets are an integrated structure, when the burthen of a vehicle is small, the vehicle starts and accelerates using a transmission ratio of middle-speed gear, and when the vehicle reaches the set mileage speed, the clutch (6) on the planet carriers combines the rotating drum of the transmission, and the vehicle enters to the high-speed gear rapidly. The above is the changing course of the speed in positive direction of the automatic stepped transmission. When the burthen of the vehicle is large, the mileage speed of the vehicle becomes slow, and the clutch on the planet carriers separates from the rotating drum of the transmission; at the time the driver steps on the gas to increase power, the rotation speed of the engine increases, the clutch (3) combined with the gear ring (4) of the middle-speed gear separates, the torque of the engine is only input from the central gear of the low-speed gear, and the automatic stepped transmission returns to the middle-speed gear from the high-speed gear and finally returns to the low-speed gear. The above is the changing course of the speed in reverse direction of the automatic stepped transmission.

## Claims

1. A gear shift method for an automatic step gearbox of a vehicle, comprising inputting an engine torque to a high-speed shift or a middle-speed shift directly, and the gearbox changes the speed in positive direction to enter to the high- speed shift or in reverse direction to return to the low-speed shift according to the vehicle speed and a burthen of an engine.
